# EUROPÄISCHE PATENTSCHRIFT

(11) **EP 2 682 317 B1**
(45) Veröffentlichungstag und Bekanntmachung des Hinweises auf die Patenterteilung: **12.12.2018**
(21) Anmeldenummer: 13175230.5
(22) Anmeldetag: 05.07.2013
(51) Int. Cl.: B60T 13/26, B60T 15/04, B60T 15/18

(54) **Steuerventil mit Mindestdruckbegrenzung**
Control valve with minimum pressure limiting
Soupape de distribution avec limitation de la pression minimale

(30) Priorität: 06.07.2012 DE 102012013524
(43) Veröffentlichungstag der Anmeldung: 08.01.2014
(73) Patentinhaber: KNORR-BREMSE Systeme für Schienenfahrzeuge GmbH, 80809 München (DE)
(72) Erfinder: Czypionka, Simon, 81825 München (DE); Stumpfegger, Christian, 84036 Landshut (DE)

(56) Entgegenhaltungen:
- DE-A1- 2 533 783
- DE-B1- 2 714 723
- DE-C- 814 169

## Beschreibung

Die Erfindung betrifft ein Steuerventil für eine indirekt wirkende Druckluftbremse eines Schienenfahrzeuges, mit einer Ventilmechanik (2), sowie einem Relaisventil (3) zum Schalten eines Bremsdruckes, einem Höchstdruckbegrenzer und einer Speisedruckleitung, weiterhin umfassend einen von einer Hauptluftleitung HL zur Vorgabe eines pneumatischen Bremssignals beaufschlagten Steuerkolben für die Betätigung der Ventilmechanik zur Belüftung R oder Entlüftung 0 eines Vorsteuerdrucks C_{V} für die Ansteuerung des Relaisventils zum Schalten eines Bremszylinderdrucks C, wobei die Belüftung R über einen Höchstdruckbegrenzer HDB erfolgt. Weiterhin betrifft die Erfindung auch ein Verfahren zum Betrieb eines solchen Steuerventils.

Das Einsatzgebiet der Erfindung ist der Schienenfahrzeugbau. Schienenfahrzeuge haben meist eine selbsttätige automatische Druckluftbremse, bei der die Absenkung des Drucks in einer Hauptluftleitung, ausgehend von einem Regelbetriebsdruck, die Ausbildung eines Bremszylinderdrucks hervorruft. Die Übertragungsfunktion vom sinkenden Druck in der Hauptluftleitung zum steigenden Bremszylinderdruck und umgekehrt wird von Steuerventilen der hier interessierenden Art ausgeführt.

Beim Bremsen erzeugt das Steuerventil einen möglichst schnellen Anstieg des Bremszylinderdrucks bis zu einer Mindesthöhe. Dieser Mindestdruck wird durch eine mit dem Steuerventil zusammenwirkenden Mindestdruckbegrenzer limitiert. Der zunächst schnelle Anstieg des Bremszylinderdrucks bewirkt ein entsprechend schnelles Überwinden der Reibung im Bremsgestänge und bringt die Bremsbeläge mit einer gewissen Bremsbackenkraft in Bremsposition. Dieser Druckanstieg im Bremszylinder bis zur Mindestdruckhöhe wird auch als Ansprung bezeichnet. Der weitere Anstieg des Bremsdrucks erfolgt entsprechend der gewünschten Bremszeit.

Aus der DE 25 33 783 A1 geht ein Steuerventil für Druckluftbremsen hervor, welches ein Dreidruckorgan zur Überwachung des Bremszylinderdrucks und einem den Druckanstieg im Bremszylinder auf einen festgelegten Höchstwert begrenzenden Höchstdruckbegrenzer in der Verbindungsleitung zwischen dem Vorratsdruckbehälter und dem Einlassventilsitz des Dreidruckorgans umfasst. Ferner ist ein Mindestdruckbegrenzer in Form eines Kolbenventils vorgesehen, welcher einen anfänglich schnellen Anstieg des Bremszylinderdrucks bis zu einer Mindesthöhe durch einen entsprechend beschleunigten Einschuss von Druckluft in die Vorsteuerdruckkammer des Steuerventils ermöglicht. Aus der DE 814 169 C ist ein ähnliches Steuerventil bekannt.

Zur Realisierung der Mindestdruckbegrenzung sind somit mehrere zusätzliche Ventilteile vorzusehen.

Es ist die Aufgabe der vorliegenden Erfindung, ein Steuerventil der gattungsgemäßen Art dahingehend weiter zu verbessern, dass die Mindestdruckbegrenzung mit möglichst wenig Einzelbauteilen in einfacher Weise umgesetzt werden kann.

Die Aufgabe wird ausgehend von einem Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Verfahrenstechnisch wird die Aufgabe nach Anspruch 8 gelöst.

Die Erfindung schließt die technische Lehre ein, dass in die Speisedruckleitung zwischen dem Höchstdruckbegrenzer HDB und dem Anschluss der Belüftung R eine Bremsdüse eingefügt ist, und dass zur Mindestdruckbegrenzung zwischen der Bremsdüse und dem Anschluss der Belüftung R am Steuerventil ein MDB-Druckspeicher an die Speisedruckleitung angeschlossen ist, so dass beim Bremsen zunächst der MDB-Druckspeicher den Vorsteuerdruck C_{V} ungedrosselt speist, wonach der Höchstdruckbegrenzer HDB den Vorsteuerdruck C_{V} über die Bremsdüse gedrosselt speist.

Der Vorteil der erfindungsgemäßen Lösung liegt insbesondere darin, dass eine Mindestdruckbegrenzung ohne zusätzliche Ventilmittel realisiert werden kann. Da keine Ventilbauteile hierfür erforderlich sind, funktioniert die Mindestdruckbegrenzung vollkommen wartungsfrei.

Das Steuerventil ist gemäß einer bevorzugten Ausführungsform derart konstruiert, dass der Anschluss der Belüftung in eine Belüftungskammer an einem durch den Steuerkolben betätigten Einlassventilsitz einmündet, über welchen eine Verbindung mit einer Vorsteuerdruckkammer herstellbar ist. Zur Entlüftung 0 des Vorsteuerdrucks C_{V} in der Vorsteuerdruckkammer stellt ein vom Steuerkolben betätigter Auslassventilsitz eine Verbindung mit einer nach außen führenden Entlüftungskammer her. Der Einlassventilsitz und der Auslassventilsitz sind bei dieser bevorzugten Ausführungsform vorzugsweise in ein gemeinsames Doppelsitzventil platzsparend integriert.

Vorzugsweise wird der als Differenzkolben ausgebildete Steuerkolben zu der einen Seite von dem Druck der Hauptluftleitung HL und zur gegenüberliegenden Seite von einem Referenzdruck A beaufschlagt.

Der maximale Druck im gefühlten MDB-Druckspeicher liegt auf dem Niveau des am Höchstdruckbegrenzer eingestellten Drucks von 3,5 bis 4 bar, vorzugsweise 3,81 bar. Vor einer (Schnell-) Bremsung ist der MDB-Druckspeicher auf den im Steuerventil herrschenden Speisedruck zur Belüftung R aufgefüllt. Ist der Höchstdruckbegrenzer also auf die vorzugsweise 3,81 bar eingestellt, so herrschen im Inneren des MDB-Druckspeichers ebenfalls 3,81 bar. Zu Beginn der Bremsung kann der Vorsteuerdruck direkt und ungedrosselt aus dem MDB-Druckspeicher entnommen werden. Zwischen dem MDB-Druckspeicher und dem herkömmlichen Vorratsdruckspeicher gleicht sich der Druck in 1 bis 2 Sekunden aus und bleibt auf einem Druckniveau von ca. 0,7 bar. Nachdem der Vorsteuerdruck C_{V} entsprechend ungedrosselt aus dem MDB-Druckspeicher gespeist wurde, erfolgt eine weitere gedrosselte Speisung über den Höchstdruckbegrenzer HDB. Die Drosselung erfolgt hierbei über die Bremsdüse je nach gewählter Betriebsart Güterzug/Personenzug. Nach Abschluss der Bremsung wird der MDB-Druckspeicher über die Bremsdüse wieder auf das vom Höchstdruckbegrenzer festgesetzte Niveau gebracht.

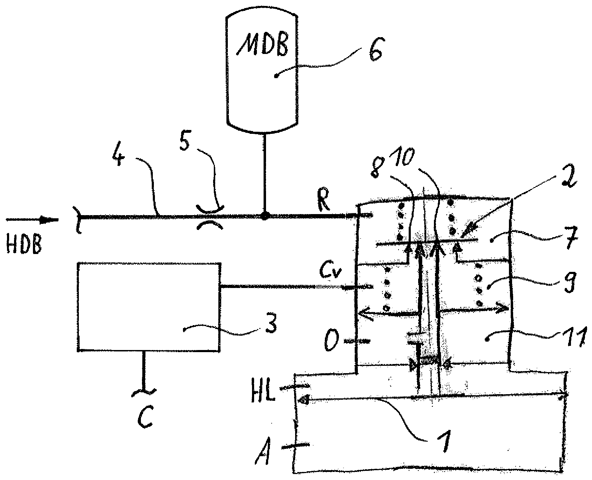

Weitere die Erfindung verbessernde Maßnahmen werden nachstehend gemeinsam mit der Beschreibung eines bevorzugten Ausführungsbeispiels der Erfindung anhand der Zeichnung näher dargestellt. Die einzige Figur zeigt eine schematische Darstellung eines Steuerventils mit einer Mindestdruckbegrenzung über einen MDB-Druckspeicher.

Gemäß Figur umfasst das Steuerventil im Wesentlichen einen von einer Hauptluftleitung HL zur Vorgabe eines pneumatischen Bremssignals beaufschlagten Steuerkolben 1, welcher zu der vom Druck aus der Hauptluftleitung HL gegenüberliegenden Seite von einem Referenzdruck A beaufschlagt ist und insoweit einen Differenzkolben bildet.

Der Steuerkolben 1 dient der Betätigung einer Ventilmechanik 2 für die Belüftung R oder die Entlüftung 0 eines Vorsteuerdrucks C_{V} zur Ansteuerung eines nachfolgenden Relaisventils 3. Das Relaisventil 3 dient dem Schalten eines Bremszylinderdrucks C. Eine Absenkung des Drucks in der Hauptluftleitung HL führt im normalen Bremsbetrieb zu einem entsprechend proportionalen Anstieg des Bremszylinderdrucks C im - nicht weiter dargestellten - Bremszylinder der Druckluftbremse. Hiervon abweichend folgt zum Schnellbremsen als sogenannter Ansprung ein zunächst schneller Druckanstieg bis zu einem festgesetzten Mindestdruck, der von einem Mindestdruckbegrenzer erzeugt wird.

Die normale Belüftung R des Steuerventils erfolgt ausgehend von einem - nicht weiter dargestellten - Höchstdruckbegrenzer HDB über eine Speisedruckleitung 4. In die Speisedruckleitung 4 ist zwischen dem Höchstdruckbegrenzer HDB und dem gehäuseseitigen Anschluss der Belüftung R eine Bremsdüse 5 eingefügt, so dass der Höchstdruckbegrenzer HDB den Vorsteuerdruck C_{V} über die Bremsdüse 5 gedrosselt speist.

Zur Mindestdruckbegrenzung ist weiterhin zwischen der Bremsdüse 5 und dem gehäuseseitigen Anschluss der Belüftung R ein MDB-Druckspeicher 6 an die Speisedruckleitung 4 angeschlossen, so dass beim Schnellbremsen zunächst der MDB-Druckspeicher 6 den Vorsteuerdruck C_{V} ungedrosselt speist, bis die weitere Versorgung mit Vorsteuerdruck C_{V} über den Höchstdruckbegrenzer HDB über die Bremsdüse 5 gedrosselt erfolgt.

Der gehäuseseitige Anschluss der Belüftung R verbindet die Speisedruckleitung 4 mit einer Belüftungskammer 7 eines Einlassventilsitzes 8. Über den Einlassventilsitz 8 ist eine Verbindung mit einer Vorsteuerdruckkammer 9 herstellbar, in welcher Vorsteuerdruck C_{V} zur Ansteuerung des nachgeschalteten Relaisventils zur Ansteuerung des nachgeschalteten Relaisventils 3 herrscht. Zur Entlüftung 0 des Vorsteuerdrucks C_{V} aus der Vorsteuerdruckkammer 9 dient ein vom Steuerkolben 1 betätigter Auslassventilsitz 10. Der Auslassventilsitz 10 stellt eine Verbindung zwischen der Vorsteuerdruckkammer 9 und einer nach außen hin führenden Lüftungskammer 11 her. Sowohl der Einlassventilsitz 8 als auch der Auslassventilsitz 10 sind in einem gemeinsamen Doppelsitzventil als Ventilmechanik 2 integriert.

Der als Differenzkolben ausgebildete Steuerkolben 1 ist zu der einen Seite von dem Druck der Hauptluftleitung HL und zur gegenüberliegenden Seite von einem Referenzdruck A beaufschlagt. Der Referenzdruck A wird fest vorgenommen und der Steuerkolben 1 bewegt sich entsprechend der herrschenden Druckdifferenz zum Druck der Hauptluftleitung HL. Ein Absenken des Drucks in der Hauptluftleitung HL führt bei der hier dargestellten Ventilmechanik 2 zu einem Öffnen des Einlassventilsitzes 8, so dass durch Belüftung R eine Erhöhung des Vorsteuerdrucks C_{V} erfolgt, um mit Hilfe des nachgeschalteten Relaisventils 3 eine entsprechend proportionale Erhöhung des Bremszylinderdrucks C herbeizuführen, so dass eine Bremsung erfolgt. Zum Lösen der Bremsen wird der Druck in der Hauptluftleitung HL angehoben, und zwar über das Niveau des Referenzdrucks A, so dass sich der Steuerkolben 1 in die entgegengesetzte Richtung bewegt, um den Auslassventilsitz 10 nach Schließen des Einlassventilsitzes 8 zu öffnen, so dass der Vorsteuerdruck C_{V} zur Entlüftung 0 gelangt. Das hierdurch bewirkte Absenken des Vorsteuerdrucks C_{V} führt zu einem proportionalen Absenken des Bremszylinderdrucks C über das Relaisventil 3, so dass die Bremsen gelöst werden.

Im Hinblick auf die erfindungsgemäße Lösung erfolgt insbesondere beim Schnellbremsen eine zunächst ungedrosselte, also schnelle Zufuhr von Vorsteuerdruck C_{V} durch den MDB-Druckspeicher 6, wonach der Vorsteuerdruck C_{V} gedrosselt über einen Höchstdruckbegrenzer HDB gespeist wird. Der maximale Druck im gefüllten MDB-Druckspeicher 6 liegt auf dem Niveau des am Höchstdruckbegrenzer HDB eingestellten Drucks, vorzugsweise 3,81 bar.

Die Erfindung ist nicht beschränkt auf das vorstehend beschriebene bevorzugte Ausführungsbeispiel. Es sind auch Änderungen möglich, welche vom Schutzbereich der nachfolgenden Ansprüche mit umfasst sind. So ist es beispielsweise auch denkbar, die Ventilmechanik auf eine andere Weise auszuführen, beispielsweise durch Einzelventile oder dergleichen.

### Bezugszeichenliste

- 1: Steuerkolben
- 2: Ventilmechanik
- 3: Relaisventil
- 4: Speisedruckleitung
- 5: Bremsdüse
- 6: MDB-Druckspeicher
- 7: Belüftungskanal
- 8: Einlassventilsitz
- 9: Vorsteuerdruckkammer
- 10: Auslassventilsitz
- 11: Entlüftungskammer

- HL: Hauptluftleitung
- R: Belüftung
- 0: Entlüftung
- Cᵥ: Vorsteuerdruck
- HDB: Höchstdruckbegrenzer
- MDB: Mindestdruckbegrenzung
- A: Referenzdruck

## Patentansprüche

1. Steuerventil für eine indirekt wirkende Druckluftbremse eines Schienenfahrzeuges, mit einer Ventilmechanik (2), sowie einem Relaisventil (3) zum Schalten eines Bremsdruckes, einem Höchstdruckbegrenzer (HDB) und einer Speisedruckleitung (4), weiterhin umfassend einen von einer Hauptluftleitung (HL) zur Vorgabe eines pneumatischen Bremssignals beaufschlagten Steuerkolben (1) zur Betätigung der Ventilmechanik (2) für die Belüftung (R) oder Entlüftung (0) eines Vorsteuerdrucks (C_{V}) zur Ansteuerung des Relaisventils (3) zum Schalten des Bremszylinderdrucks (C), wobei die Belüftung (R) ausgehend von dem Höchstdruckbegrenzer (HDB) über die Speisedruckleitung (4) erfolgt, wobei eine Bremsdüse in die Speisedruckleitung (4) zwischen dem Höchstdruckbegrenzer (HDB) und dem Anschluss der Belüftung (R) eingefügt ist, **dadurch gekennzeichnet, dass** zur Mindestdruckbegrenzung zwischen der Bremsdüse (5) und dem Anschluss der Belüftung (R) ein MDB-Druckspeicher (6) an die Speisedruckleitung (4) angeschlossen ist, so dass beim Schnellbremsen zunächst der MDB-Druckspeicher (6) den Vorsteuerdruck (C_{V}) ungedrosselt speist, wonach der Höchstdruckbegrenzer (HDB) den Vorsteuerdruck (C_{V}) über die Bremsdüse (5) gedrosselt speist.

2. Steuerventil nach Anspruch 1,
**dadurch gekennzeichnet, dass** der Anschluss der Belüftung (R) in eine Belüftungskammer (7) an einem durch den Steuerkolben (1) betätigten Einlassventilsitz (8) einmündet, über welchen eine Verbindung mit einer Vorsteuerdruckkammer (9) herstellbar ist.

3. Steuerventil nach Anspruch 1,
**dadurch gekennzeichnet, dass** zur Entlüftung (0) des Vorsteuerdrucks (C_{V}) in der Vorsteuerdruckkammer (9) ein vom Steuerkolben (1) betätigter Auslassventilsitz (10) eine Verbindung mit einer nach Außen führenden Entlüftungskammer (11) herstellt.

4. Steuerventil nach Anspruch 2 und 3,
**dadurch gekennzeichnet, dass** der Einlassventilsitz (8) und der Auslassventilsitz (10) in ein gemeinsames Doppelsitzventil als Ventilmechanik (2) integriert sind.

5. Steuerventil nach Anspruch 1,
**dadurch gekennzeichnet, dass** der als Differenzkolben ausgebildete Steuerkolben (1) zu der einen Seite von dem Druck der Hauptluftleitung (HL) und zur gegenüberliegenden Seite von einem Referenzdruck (A) beaufschlagt ist.

6. Steuerventil nach Anspruch 1,
**dadurch gekennzeichnet, dass** der maximale Druck im gefüllten MDB-Druckspeicher (6) auf dem Niveau des am Höchstdruckbegrenzer (HDB) eingestellten Drucks liegt.

7. Steuerventil nach Anspruch 6,
**dadurch gekennzeichnet, dass** der Höchstdruckbegrenzer (HDB) einen Höchstdruck von 3,5 bis 4 bar liefert.

8. Verfahren zum Betrieb eines Steuerventils nach einem der vorstehenden Ansprüche,
**dadurch gekennzeichnet, dass** der Vorsteuerdruck (C_{V}) beim Schnellbremsen zunächst ungedrosselt aus dem MDB-Druckspeicher (6) gespeist wird, wonach der Vorsteuerdruck (C_{V}) gedrosselt über den Höchstdruckbegrenzer (HDB) gespeist wird.

## Claims

1. A control valve for an indirectly acting compressed-air brake of a rail vehicle comprising a valve mechanism (2), a relay valve (3) for controlling a brake pressure, a maximum pressure limiter (HDB) and a supply pressure line (4) and further comprising a control piston (1), which is supplied with air from a main air line (HL) to pre-set a pneumatic brake signal, for actuating the valve mechanism (2) to aerate (R) or vent (0) a pilot pressure (C_{V}) in order to activate the relay valve (3) to control the brake cylinder pressure (C), said aeration (R) proceeding from the maximum pressure limiter (HDB) through the supply pressure line (4), a brake jet being inserted into the supply pressure line (4) between the maximum pressure limiter (HDB) and the connection for aeration (R),
**characterised in that** to achieve minimum pressure limitation a minimum pressure limitation (MDB) pressure reservoir (6) is connected to the supply pressure line (4) between the brake jet (5) and the connection for aeration (R) such that during emergency braking initially the minimum pressure limitation (MDB) pressure reservoir (6) HL supplies the pilot pressure (C_{V}) unthrottled, after which the maximum pressure limiter (HDB) supplies the pilot pressure (C_{V}) throttled via the brake jet (5).

2. A control valve according to claim 1,
**characterised in that** the connection for aeration (R) runs into an aeration chamber (7) at an inlet valve seat (8) which is actuated by the control piston (1) and via which it is possible to make a connection with a pilot pressure chamber (9).

3. A control valve according to claim 1,
**characterised in that** in order to vent (0) the pilot pressure (C_{V}) in the pilot pressure chamber (9) an outlet valve seat (10) actuated by a control piston (1) makes a connection with a venting chamber (11) leading to the outside.

4. A control valve according to claim 2 and 3,
**characterised in that** the inlet valve seat (8) and the outlet valve seat (10) are integrated in a common double-seat valve as a valve mechanism (2).

5. A control valve according to claim 1,
**characterised in that** the control piston (1), which is designed as a differential piston, is supplied on one side with the pressure from the main air line (HL) and on the opposite side with a reference pressure (A).

6. A control valve according to claim 1,
**characterised in that** the maximum pressure in the filled minimum pressure limitation (MDB) pressure reservoir (6) lies at the level of the pressure set at the maximum pressure limiter (HDB).

7. A control valve according to claim 6,
**characterised in that** the maximum pressure limiter (HDB) supplies a maximum pressure of 3.5 to 4 bar.

8. A process for operating a control valve according to any of the preceding claims,
**characterised in that** during emergency braking the pilot pressure (C_{V}) is initially supplied unthrottled from the minimum pressure limitation (MDB) pressure reservoir (6), after which said pilot pressure (C_{V}) is supplied throttled via the maximum pressure limiter (HDB).

## Revendications

1. Soupape de distribution pour un frein à air comprimé, agissant de façon indirecte, d'un véhicule ferroviaire, comprenant un mécanisme (2) de soupape, ainsi qu'une soupape (3) relais pour appliquer une pression de freinage, un limiteur (HDB) de pression la plus haute et un conduit (4) de pression d'alimentation, comprenant, en outre, un piston (1) de commande, alimenté par un conduit (HL) d'air principal, pour prescrire un signal de freinage pneumatique, afin d'actionner le mécanisme (2) de soupape pour l'alimentation (R) en air ou la purge (0) d'une pression (C_{V}) pilote de commande de la soupape (3) relais, pour appliquer la pression (C) de cylindre de frein, l'alimentation (R) en air s'effectuant à partir du limiteur (HDB) de pression la plus haute, par l'intermédiaire de la ligne (4) de pression d'alimentation,
dans laquelle une buse de frein est insérée dans le conduit (4) de pression d'alimentation entre le limiteur (HDB) de pression la plus haute et le raccord de l'alimentation (R) en air, **caractérisée**
**en ce que**, pour la limitation de la pression la plus basse, il est raccordé au conduit (4) de pression d'alimentation un accumulateur (6) de pression MDB entre la buse (5) de frein et le raccord de l'alimentation (R) en air, de manière à ce que, lors d'un freinage rapide, l'accumulateur (6) de pression MDB applique d'abord, sans étranglement, la pression (C_{V}) pilote, le limiteur (HDB) de pression la plus haute appliquant ensuite, avec étranglement, la pression (C_{V}) pilote, par -l'intermédiaire de la buse (5) de frein.

2. Soupape de distribution suivant la revendication 1, **caractérisée en ce que** le raccord de l'alimentation (R) en air débouche dans une chambre (7) d'alimentation en air, sur un siège (8) de soupape d'entrée, qui est actionné par le piston (1) de commande et par lequel une liaison avec une chambre (9) de pression pilote peut être ménagée.

3. Soupape de distribution suivant la revendication 1, **caractérisée en ce que**, pour mettre à l'atmosphère (0) la pression (C_{V}) de pilote dans la chambre (9) pilote, un siège (10) de soupape de sortie, actionné par le piston (1) de commande, ménage une liaison avec une chambre (11) de mise à l'atmosphère menant à l'extérieur.

4. Soupape de distribution suivant la revendication 2 et 3, **caractérisée en ce que** le siège (8) de la soupape d'entrée et le siège (10) de la soupape de sortie sont intégrés sous la forme d'un mécanisme (2) de soupape, en une soupape commune à siège double.

5. Soupape de distribution suivant la revendication 1, **caractérisée en ce que** le piston (1) de commande constitué en piston différentiel est alimenté d'un côté par la pression du conduit (HL) d'air principal et du côté opposé par une pression (A) de référence.

6. Soupape de distribution suivant la revendication 1, **caractérisée en ce que** la pression maximum dans l'accumulateur (6) de pression MDB rempli se trouve au niveau de la pression réglée au limiteur (HDB) de pression la plus haute.

7. Soupape de distribution suivant la revendication 6, **caractérisée en ce que** le limiteur (HDB) de pression la plus haute fournit une pression la plus haute de 3,5 à 4 bar.

8. Procédé pour faire fonctionner une soupape de distribution suivant l'une des revendications précédentes,
**caractérisé en ce que** l'on applique d'abord la pression (C_{V}) pilote lors d'un freinage rapide, sans étranglement, à partir de l'accumulateur (6) de pression MDB, puis on applique la pression (C_{V}) pilote, avec étranglement, par l'intermédiaire du limiteur (HDB) de pression la plus haute.
